Europäisches Patentamt

European Patent Office

Office européen des brevets

(19)

(11) Numéro de publication : **0 648 058 A1**

(12) **DEMANDE DE BREVET EUROPEEN**

(21) Numéro de dépôt : **94402213.6**

(22) Date de dépôt : **04.10.94**

(51) Int. Cl.⁶ : **H04N 7/26**

(30) Priorité : **08.10.93 FR 9312017**

(43) Date de publication de la demande :
**12.04.95 Bulletin 95/15**

(84) Etats contractants désignés :
**BE DE ES GB IT NL**

(71) Demandeur : **TELEDIFFUSION DE FRANCE,
société anonyme
10, rue d'Oradour sur Glane
F-75015 Paris (FR)**

(72) Inventeur : **Seck, Maktar
672 Usine Niari Tyali
Dakar (SN)**

(74) Mandataire : **Rodhain, Claude et al
Cabinet Claude Rodhain S.A.
3, rue Moncey
F-75009 Paris (FR)**

(54) **Système de traitement d'images numérisées et son application à la compression-décompression de ces images ou à un dispositif d'autofocalisation pour caméra vidéo.**

(57) L'invention concerne un système de traitement d'images numérisées. Selon l'invention, on prévoit une architecture de traitement parallèle réalisée à base de TRANSPUTERS. Le système comprend un premier TRANSPUTER (1), ou module d'acquisition, communiquant par un lien de communication bidirectionnelle (10-11) avec un lien homologue (20-21) d'un second TRANSPUTER (2), ou module de traitement. Sur ce lien sont disposés des circuits spécialisés de calcul de Transformées en Cosinus Discrète (3) directe et inverse. La logique (34) propre à ces circuits (3) est capable, notamment, de décoder des mots de commande générés par le module de traitement (2) et commutant les circuits (3) selon trois modes : un mode transparent et deux modes actifs pour le calcul des Transformées en Cosinus Discrètes directe et inverse. Le module de traitement (2) peut comprendre plusieurs TRANSPUTER organisés en réseau de configuration variable.

Application notamment au codage pour les transmissions bas débit et à l'autofocalisation d'une caméra vidéo.

FIG_3

EP 0 648 058 A1

L'invention concerne un système constituant une chaîne de traitement d'images numérisées.

Elle concerne notamment l'application d'un tel système à la compression-décompression de telles images, en vue par exemple de transmissions numériques bas débit, et à un dispositif d'auto-focalisation pour caméra vidéo.

En traitement d'image, les traitements sont effectués sur des images réelles, prises par différents dispositifs tels que caméra, scanner, capteur à rayon X, etc. Le but du traitement d'image est d'agir sur ces images numérisées afin d'en extraire les informations et paramètres utiles. Ces informations et paramètres sont utilisés à des fins d'analyse, de calculs scientifiques, ou encore réinjectées dans une chaîne d'automatismes (automatisation de processus industriels, de transmission de l'image).

La quantité de données à manipuler et la complexité des calculs souvent répétitifs font appel à une puissance de calcul importante notamment lorsque le temps réel est requis.

La taille d'une image en noir et blanc de 512×512 pixels sur 256 niveaux de gris est de 256 Koctets. Plus de 32 secondes sont alors nécessaires pour transmettre une telle quantité d'information par un réseau de transmission public de type RNIS (Réseau Numérique à Intégration de Services). Pour des séquences animées la quantité d'information est multipliée par le nombre d'images à acquérir par seconde.

Tout système de transmission d'images doit être en mesure d'acquérir, de traiter, de transmettre et de visualiser des séquences d'images numérisées dans un temps limité. Les contraintes de temps réel varient avec le domaine d'application. Pour un service de télévision, 25 images par seconde sont nécessaires. Par contre pour des applications telles que la visiophonie ou la télésurveillance, quelques images suffisent, typiquement entre 10 et 15 images par seconde.

Des dispositifs de codage bas débit ont été mis au point ces dernières années. La plupart des méthodes utilisées mettent en oeuvre des techniques de compression d'images pour limiter au maximum la quantité d'informations transmises. On tire profit du fait que beaucoup d'informations sont redondantes à l'intérieur d'une même image et d'une image à l'autre. Une des méthodes couramment utilisées dans le domaine de la compression d'image fait appel à un algorithme mathématique connu sous la dénomination française de TCD ou Transformation Cosinus Discrète. Elle est également connue sous le sigle anglo-saxon de DCT. Dans ce qui suit, par mesure de simplification, le sigle abrégé TCD sera utilisé pour "Transformée en Cosinus Discrète". En général, on procède sur un bloc de l'image et non sur l'image entière. La transformée TCD est une transformée orthogonale.

Le principe de la TCD est le suivant :

Pour chaque bloc de N×N pixels, on calcule la TCD qui est fournie par la formule ci-dessous :

$$F(u,v) = \frac{4.c(u)c(v)}{N^2} \sum_{x=0}^{N-1} \sum_{y=0}^{N-1} f(x.y) \cos\frac{(2x+1)u\pi}{2N} . \cos\frac{(2y+1)v\pi}{2N}$$

$$c(u) = 1/\sqrt{2} \; si \; u = 0$$

$$c(u) = 1 \; si \; u = 1,2.....N-1$$

$f(x,y)$ représente la luminance du pixel au point $(x,y)$ dans l'image et $F(u,v)$ représente le coefficient de Transformée au point $(u,v)$, avec $u$ et $v$ allant de 0 à N-1.

Pour chaque pixel d'un bloc d'image, par exemple de dimension 8×8, on calcule à l'aide de cette fonction un nombre qui est l'élément de la matrice résultat : la matrice des coefficients. La TCD d'un bloc donné représente les fréquences spatiales. Ainsi un bloc uniforme donc de fréquences spatiales faibles donne un bloc de coefficients de la TCD dont l'essentiel est le coefficient $F(0,0)$, soit la moyenne des luminances du bloc. Les autres coefficients sont proches de zéro.

La Transformée en Cosinus Discrète est entièrement symétrique. On peut reconstituer le bloc image initial à partir de la matrice des coefficients en lui appliquant une TCD inverse.

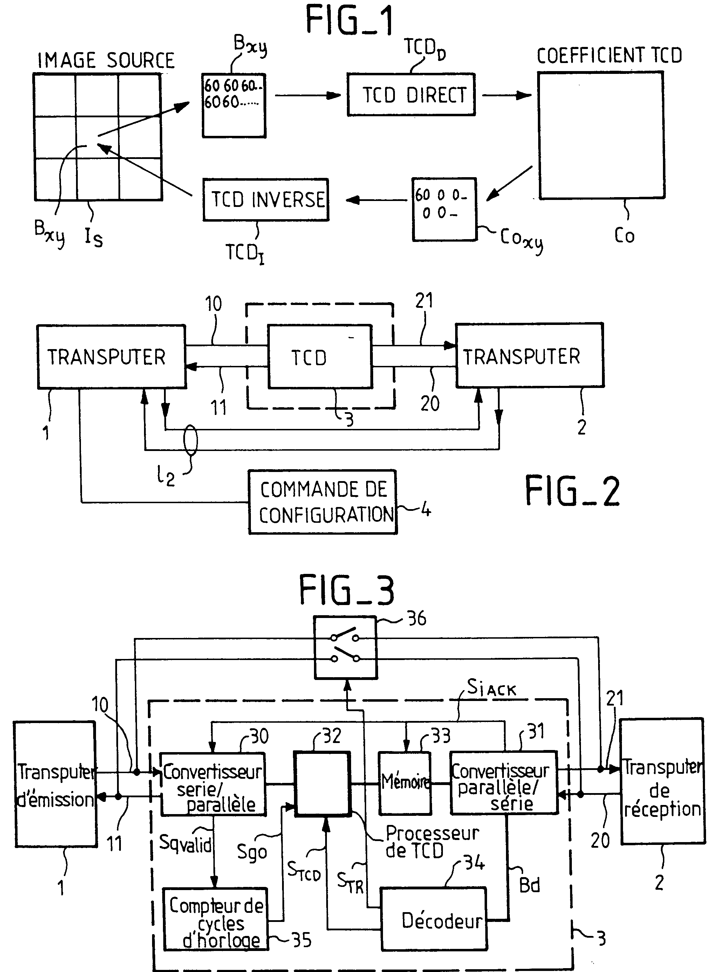

Le processus complet TCD directe-TCD inverse est représenté schématiquement par le bloc-diagramme de la figure 1 annexée. Un bloc $B_{xy}$ d'une image source $I_S$ est transformé en coefficients TCD : $CO_{xy}$, par un dispositif $TCD_D$ effectuant la TCD directe et, en sens inverse, on reconstitue le bloc initial Bxy de l'image source $I_S$ par un dispositif $TCD_I$ effectuant la TCD inverse.

Pour fixer les idées, une image noir et blanc de 256 lignes de 256 pixels sur 256 niveaux de gris contient 1024 blocs de 8×8 pixels et la TCD d'un bloc de 8×8 pixels (représentés par un mot de 8 à 10 bits) se calcule en faisant une double TCD, la première sur les lignes (ou les colonnes) et la seconde sur les colonnes (respectivement sur les lignes) du résultat. Ceci se traduit par deux multiplications successives de matrices de 8×8 éléments, soit au total pour les deux multiplications de matrices, 1024 multiplications et 896 additions sur des nombres entiers. Il faut donc 1,05 millions de multiplications et 0,92 millions d'additions.

On conçoit donc que, si les techniques de compression d'images permettent bien de réduire fortement le débit des transmissions d'informations, il est par contre nécessaire de mettre en oeuvre des moyens de calcul très rapides et très puissants.

Pour accélérer les calculs, comme il est bien connu, on peut penser faire appel à des techniques de traitement parallèle. Cependant, il est également nécessaire d'obtenir ou préserver d'autres caractéristiques techniques telles que simplicité, développement aisé des programmes informatiques nécessaires au bon fonctionnement des organes de calcul quels qu'ils soient, portabilité de ces programmes, calculs en temps réel, coût raisonnable, etc. .

L'invention se fixe pour but un système de traitement d'images numérisées satisfaisant simultanément les exigences rappelées ci-dessus.

Pour ce faire, l'invention prévoit un système de traitement d'images numérisées doté d'une architecture parallèle présentant les particularités suivantes :

Selon une première caractéristique de l'invention, les processeurs de base sont du type connu sous l'appellation anglo-saxonne de TRANSPUTER ou d'un type analogue. Un TRANSPUTER est un microprocesseur spécialisé, c'est-à-dire dédié, à très haute intégration ou VLSI ("Very Large Scale Intégration") selon le sigle anglo-saxon couramment utilisé. C'est un circuit en général monoboitier et réalisé actuellement en technologie CMOS. Il comprend notamment une unité centrale, une mémoire locale propre et des liens de communication bidirectionnelle à haute vitesse. L'architecture de l'unité centrale, c'est-à-dire du processeur local, est du type RISC ("Reduced-Instruction-Set Computer"), c'est à dire à jeu d'instructions réduit. Il permet de réaliser, en parallèle, des calculs et des communications sans logique extérieure.

Selon une deuxième caractéristique de l'invention, dans un mode de réalisation préféré, on utilise également, pour calculer la TCD, un circuit intégré spécialisé, disponible dans le commerce.

Selon une troisième caractéristique de l'invention, le système comprend au moins un premier TRANSPUTER, destiné notamment à l'acquisition de l'image et/ou à sa reconstitution, et un deuxième TRANSPUTER, ou TRANSPUTER de traitement des blocs de coefficients TCD.

Enfin selon une des caractéristiques principales de l'invention, les premiers et deuxièmes TRANSPUTERS communiquent entre eux par un des liens de communication bidirectionnelle dont ils sont dotés et les circuits spécialisés de calcul de TCD sont intercalés entre ces deux TRANSPUTERS, disposés sur le lien précité.

Outre les données numériques circulant entre les deux TRANSPUTERS sur le lien de communication bidirectionnelle, celui-ci transmet également des instructions de commande aux circuits spécialisés de calcul de TCD. Ces derniers peuvent fonctionner selon au moins deux modes principaux : un mode dit "transparent", utilisé notamment lors de l'initialisation du système, et un mode actif pour lequel la TCD est calculée. Dans un mode de réalisation préféré, ce deuxième mode se décompose en deux sous-modes : un mode de calcul de la TCD directe sur les données provenant du premier TRANSPUTER, ou TRANSPUTER d'émission, pour générer les coefficients TCD, et un mode de calcul de la TCD inverse, pour calculer à partir des coefficients TCD provenant du deuxième TRANSPUTER, ou TRANSPUTER de réception, la TCD inverse en vue de reconstituer l'image d'origine.

En fonction de l'application envisagée, le deuxième TRANSPUTER est unique ou au contraire remplacé par un réseau de TRANSPUTERS configuré selon une architecture spécifique à cette application. En outre, ces TRANSPUTERS peuvent être liés à d'autres types de processeurs en tant que de besoin. Le deuxième TRANSPUTER ou le réseau de TRANSPUTERS constitue ce qui sera appelé ci-après "module de traitement".

L'invention a donc pour objet un système constituant au moins une chaîne de traitement d'images numérisées comprenant des moyens pour l'acquisition de caractéristiques physiques prédéterminées de ces images et pour leur conversion en signaux électriques numériques représentatifs de ces images, des premiers moyens de traitement permettant au moins la décomposition desdites images en blocs d'éléments binaires de taille déterminée, des moyens pour calculer au moins la Transformée en Cosinus Discrète directe de ces blocs et fournir des blocs de coefficients correspondants et des seconds moyens de traitement opérant sur ces blocs de coefficients, caractérisé en ce que les premiers et seconds moyens de traitement comprennent chacun au moins un processeur d'un type susceptible de fonctionner en parallèle et comportant au moins un lien de communication bidirectionnelle, en ce que les dits premiers et seconds moyens de traitement sont connectés par au moins un lien de communication bidirectionnelle commun et en ce que les moyens de calcul de la Transformée en Cosinus Discrète sont intercalés sur ce lien commun.

L'invention a encore pour objet un dispositif de codage d'images numérisées, destiné à une transmission à bas débit, caractérisé en ce qu'il comprend des moyens de prise de vue, des moyens d'acquisition et de numérisation des images issues de ladite prise de vue et des moyens de visualisation, en ce qu'il comprend un système constituant au moins une chaîne de traitement d'images numérisées comme décrit ci-dessus opérant sur les images numérisées et en ce que les seconds moyens de traitement effectuent des opérations réversibles de vectorisation des blocs de coefficients de transformée et de quantification vectorielles des vecteurs issus de ces blocs.

L'invention a enfin pour objet un dispositif de commande d'auto-focalisation pour la mise au point d'une caméra vidéo, caractérisé en ce qu'il comprend des moyens de prise de vue constitués par ladite caméra, des moyens d'acquisition et de numérisation des images issues de la prise de vue et des moyens de visualisation d'images, en ce qu'il comprend un système constituant au moins une chaîne de traitement d'images numérisées comme décrit ci-dessus, et en ce que les seconds moyens de traitement sont agencés pour transmettre des signaux de commandes itératifs à des circuits de commande de la mise au point de ladite caméra tant que celle-ci est incorrecte et pour transmettre un signal d'acquisition correcte aux moyens d'acquisition, de numérisation et de visualisation d'images lorsque la mise au point est correcte.

Le système selon l'invention présente donc de nombreux avantages et notamment les suivants :

- Simplicité : on aurait pu penser mettre en oeuvre une autre méthode de communication des circuits spécialisés de calcul de TCD avec les TRANSPUTERS, par exemple par l'intermédiaire de port de communication, c'est-à-dire par une série d'adresses de mémoire du TRANSPUTER, mais l'inconvénient de cette méthode est qu'il eut fallu agir sur l'électronique du TRANSPUTER en multiplexant des adresses mémoire particulières. En intercalant le circuit spécialisé de calcul de TCD sur le lien de communication bidirectionnelle entre deux TRANSPUTER, l'invention obvie à cet inconvénient.
- Développement d'applications aisé car il est reconnu que les TRANSPUTERS sont facilement programmables. Il existe en outre de nombreuses bibliothèques de programme en divers langages : C ou OCCAM par exemple. Les TRANSPUTERS fonctionnent sur des micro-ordinateurs courants, à l'aide de cartes enfichables dans des emplacements prévus à cet effet.
- Possibilité de fonctionnement en temps réel car toutes les opérations de calcul de TCD sont "sautées" du fait de la disposition des circuits de calcul de TCD sur un lien de communication bidirectionnelle. Ces liens, comme il a été rappelé, sont des liens dotés d'un grand débit de transmission, typiquement 20 Mbits/sec. . Il en résulte une accélération de tout traitement faisant appel à la TCD codage, autofocalisation, compression selon diverses normes (JPEG, MPEG, H261, etc.).
- Grande portabilité car les difficultés rencontrées habituellement du fait de communications des TRANSPUTERS avec un environnement différent du leur sont résolus.
- Excellent rapport coût/performance les circuits spécialisés utilisés, disponibles couramment dans le commerce sont d'un coût modique. Par contre les performances de ces mêmes circuits sont élevées : par exemple, le calcul des coefficients TCD sur un bloc de $8\times8$ pixels n'exige, typiquement, que 3,2 $\mu s$. Il en est de même pour les TRANSPUTERS.

L'invention sera mieux comprise et d'autres caractéristiques et avantages apparaîtront à la lecture de la description qui suit en référence aux figures annexées, et parmi lesquelles :

- La figure 1 est un bloc diagramme illustrant le calcul d'une TCD directe et d'une TCD inverse.
- La figure 2 est un bloc-diagramme illustrant schématiquement l'architecture d'un système formant chaîne de traitement d'images numérisées selon l'invention.
- La figure 3 est un bloc diagramme détaillé illustrant schématiquement un exemple de circuit de calcul de la TCD mis en oeuvre dans le système de la figure 1.
- La figure 4 est un bloc-diagramme illustrant un exemple de TRANSPUTER utilisable par l'invention.
- La figure 5 est un bloc diagramme illustrant l'application du système selon l'invention à une chaîne de traitement d'images numérisées pour le codage et la transmission bas débit et/ou à un dispositif d'auto-focalisation d'une caméra vidéo.
- Les figures 6a à 6f illustrent différentes architectures possibles du module de traitement constituant l'un des éléments du système selon l'invention.

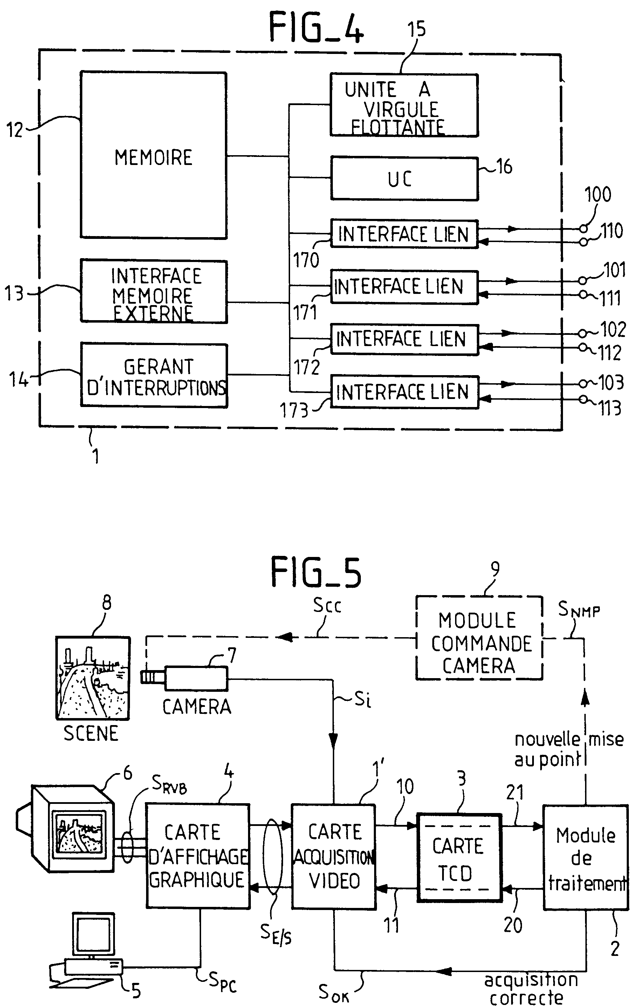

La figure 2 illustre schématiquement l'architecture générale d'un système de traitement d'images numérisées selon l'invention. Le système comprend essentiellement un premier TRANSPUTER 1 ou un processeur d'un type équivalent, un deuxième TRANSPUTER 2 et des circuits 3 spécialisés pour le calcul de TCD, qui seront appelés dans ce qui suit, par mesure de simplification carte TCD. Selon une des caractéristiques principales de l'invention, les premier et deuxième TRANSPUTERS 1 et 2 communiquent entre eux par l'intermédiaire d'un de leurs liens de communication bidirectionnelle (liaison bifilaire). Il s'agit habituellement de liaisons séries à haut débit : 10 et 20 pour les liaisons série de sortie, et 11 et 21 pour les liaisons d'entrée, respectivement des TRANSPUTERS 1 et 2. La carte TCD 3 est insérée sur ce lien commun reliant les deux TRANSPUTERS 1 et 2. dans une variante de réalisation préférée da l'invention, la carte TCD 3 est apte à effectuer des calculs de TCD directe et inverse. Des exemples de carte TCD et de TRANSPUTER utilisables dans le cadre de l'invention seront détaillés ci-après au regard des figures 3 et 4, respectivement. Le système est complété par un dispositif de commande de configuration 4, qui peut être constitué par un processeur ou un micro-ordinateur de type classique et dont le rôle sera précisé dans ce qui suit.

Dans le cadre de l'invention, et selon un mode de réalisation préféré, les principales fonctions remplies par le TRANSPUTER 1 sont les suivantes:

- acquisition de l'image numérisée $I_S$ (figure 1) et stockage des données correspondantes dans sa mémoire interne
- décomposition de l'image en blocs $B_{xy}$ (figure 1), par exemple en blocs de 8×8 pixels, représentés par des mots binaires correspondants mémorisés
- transmission des blocs $B_{xy}$ (figure 1) au TRANSPUTER 2 pour traitement
- réception de codes ou instructions particulières du TRANSPUTER 2
- réception de blocs du TRANSPUTER 2
- reconstitution de l'image originale $I_S$ à partir des blocs reçus.

En réalité, comme il a été indiqué, les communications s'effectuent au travers de la carte TCD 3. A l'exception du mode de fonctionnement dit "transparent", qui sera explicité ci-après et qui est symbolisé sur la figure 2 par des liaisons en pointillés, les données sont interceptées, quelque soit le sens de transmission, par la carte TCD qui effectue un calcul de TCD, directe ou inverse selon le cas.

Les trois premières fonctions rappelées ci-dessus peuvent être classées dans une catégorie "fonctions d'émission" et les trois dernières dans une catégorie "fonctions de réception".

De la même façon, les principales fonctions réalisées par le TRANSPUTER 2 sont les suivantes :

- envoi de codes ou instructions particulières
- réception de blocs de coefficients TCD
- traitement ultérieur de ces blocs
- envoi de blocs de coefficients TCD vers le TRANSPUTER 1

Le traitement ultérieur signalé ci-dessus est essentiellement dépendant de l'application envisagée. Des exemples d'applications seront décrits en relation avec la figure 5.

Dans le cadre de l'invention, on entend par codes ou instructions particulières, notamment des informations destinées à la carte TCD 3, interceptées et décodées par celle-ci pour lui permettre de commuter dans l'un des trois modes de fonctionnement précédemment indiqué : un mode "transparent" et deux modes actifs; un premier mode actif dans lequel elle effectue le calcul de la TCD direct et un second mode dans lequel elle effectue le calcul de la TCD inverse.

Le mode "transparent" est essentiellement utilisé lors de l'initialisation du système. Dans ce mode, les deux TRANSPUTERS 1 et 2 communiquent directement entre eux par les liaisons de communication bidirectionnelle : 10,11,20,21; la carte TCD n'interceptant plus les données. Ce fonctionnement est symbolisé, sur la figure 2, par des liaisons en pointillés court-circuitant la carte TCD 3. Le TRANSPUTER 1 fonctionne alors de façon classique en recevant des messages du TRANSPUTER 2, par exemple pour déterminer une configuration préétablie. Ce mode de fonctionnement, en soi, est commun à l'art connu et il est inutile de le détailler.

En résumé, les communications s'effectuent comme indiqué ci-dessous :

1. Par le fil 10, passent :

a/ des données provenant du TRANSPUTER 1 ou du TRANSPUTER 2 (mode transparent pour la carte TCD 3),

b/ des blocs de pixels qui seront transformés par la carte TCD 3 en blocs de coefficients TCD,

c/ des blocs de coefficients TCD qui seront transformés en blocs de pixels par la carte TCD 3.

2. Par le fil 21, passent :

e/les données selon a/,

f/les coefficients TCD des blocs de pixels selon b/,

g/ les pixels des blocs de coefficients TCD selon c/.

3. Par le fil 20, passent :

h/ des données provenant du TRANSPUTER 2 vers le TRANSPUTER 1 (mode transparent pour la carte TCD 3),

i/ des ordres adressés par le TRANSPUTER 2 à la carte TCD 3.

4. Et par le fil 11, passent :

j/les données selon h/.

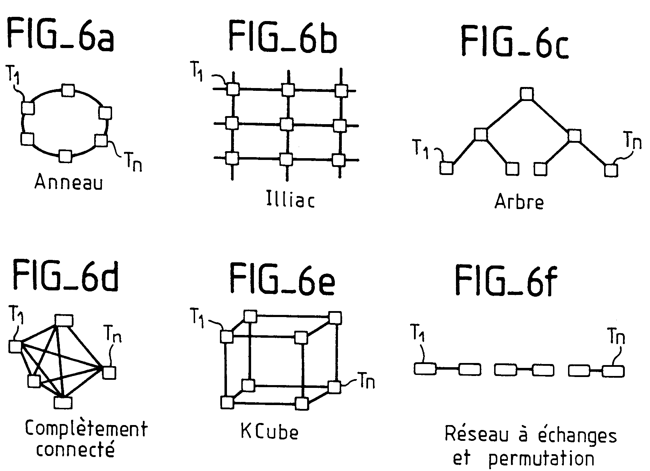

Dans l'exemple illustré, sans que cela soit limitatif les TRANSPUTERS 1 et 2 sont uniques, mais ceux-ci peuvent être remplacés par un réseau de TRANSPUTERS, un de ces TRANSPUTERS 1 communiquant avec un des TRANSPUTER 2, via la carte TCD 3, par la liaison de communication bidirectionnelle 10 à 21. Comme il a été indiqué, la configuration de ce réseau est essentiellement dépendante du traitement réalisé, c'est-à-dire de l'application. Des exemples de configurations seront illustrés ultérieurement par les figures 6a à 6f.

Un réseau peut également comprendre d'autres type de processeurs, à traitement parallèle ou non.

Les TRANSPUTERS 1 et 2 peuvent communiquer entre eux également par des liens supplémentaires $1_2$ sur la figure 2.

La figure 3 illustre de façon plus détaillée l'architecture du système de l'invention et plus particulièrement la carte TCD 3. Elle est basée sur un processeur 32 spécialisé pour le calcul de TCD. Dans un mode de réalisation préféré, on fait appel à un circuit intégré monoboitier disponible dans le commerce, par exemple le modèle IMS A121, distribué sous la marque INMOS®. Il s'agit d'un processeur de signaux numériques (DPS) multifonctions dédié au calcul en deux dimensions de la TCD directe et inverse de blocs d'image de 8×8 pixels et à des fonctions de filtrage non utilisées dans le cadre de l'invention. Ce circuit traite des données en parallèle. Les liens des TRANSPUTERS 1 et 2 transmettent les données en série, aussi deux convertisseurs série/parallèle, respectivement 30 et 31, forment les circuits d'entrée/sortie de la carte TCD et reçoivent les données en provenance des TRANSPUTERS 1 et 2 par les liens 10-11 et 20-21. A titre d'exemple non limitatif, on peut faire appel au convertisseur série/parallèle du modèle IMS C011, également distribué sous la marque INMOS®. Ce circuit est particulièrement adapté à un fonctionnement en environnement TRANSPUTERS, en particulier son interface série convient particulièrement aux caractéristiques techniques propres aux liens des TRANSPUTERS. Sur la figure 3, les liaisons séries sont figurées en traits fins et les liaisons parallèles (bus de données) en traits gras. Une mémoire 33, intercalée entre le processeur TCD 32 et le convertisseur série/parallèle 31 complète la chaîne de transmission. Dans un exemple de réalisation particulier, la mémoire 33 est constituée par un registre à bascules de type D. On peut sélectionner pour cet usage le circuit 74HCT374 distribué par TEXAS INSTRUMENTS.

Pour une description plus détaillée de ces composants électroniques, on se référera avec profit aux spécifications techniques éditées par les constructeurs. Dans ces spécifications, sont notamment indiqués la nature et les spécificités des signaux nécessaires à leur bon fonctionnement ainsi que les signaux générés par ces composants électroniques.

La carte TCD comporte également une logique de commande, comprenant essentiellement un décodeur 34, et un compteur de cycles d'horloge 35. Dans l'exemple illustré, le compteur 35 devra pouvoir compter 64 cycles puisque le processeur 32 traite des blocs de 8×8 pixels. Les signaux d'horloge $S_{qvalid}$ transmis au compteur 35 sont avantageusement dérivés d'un signal "qvalid" généré par le convertisseur 30 s'il est du modèle IMS C011 précité, ou par tout autre signal équivalent. Ce signal indique qu'un mot de 8 bits, issu de la conversion série/parallèle, est disponible en sortie du convertisseur 30. A son tour, le compteur de cycles 35 génère sur sa sortie un signal $S_{GO}$, signal initialisant le calcul de la TCD, directe ou inverse selon le mode de fonctionnement imposé au processeur 32. Ce signal est transmis à l'entrée "GO" du circuit IMS A121 (constituant le processeur 32 dans la variante préférée de l'invention). Le signal $S_{GO}$ doit être présent sur le premier pixel de chaque bloc.

Les circuits décodeurs 34 reçoivent du TRANSPUTER 2, via le convertisseur série/parallèle 31 et un bus $B_d$, des mots binaires de commande permettant la commutation du processeur 32 dans l'un des trois modes signalés. A titre d'exemple non limitatif, on peut choisir les trois valeurs hexadécimales suivantes:
- F0 (ou RESET) pour rendre la carte "transparente"
- 0F pour la rendre active et calculer la TCD directe
- AF pour la rendre active et calculer la TCD inverse

Le circuit décodeur 34 génère, sur réception de l'un des deux derniers codes, un signal de commande $S_{TCD}$ rendant actif le processeur 32 et lui indiquant quel type de calcul il doit effectuer. Sur réception du premier code, il génère un signal $S_{TR}$ rendant la carte transparente aux informations véhiculées sur les liens 10 à 21. Ce signal agit sur des commutateurs électroniques 36 court-circuitant la chaîne des circuits 30, 32, 33 et 31 en cascade. De façon avantageuse, ces commutateurs électroniques sont équipés de circuits formant "buffer" (tampon). Les deux TRANSPUTERS 1 et 2 sont alors reliés directement par leurs liens de communication bidirectionnelle (mode de fonctionnement symbolisé par des traits en pointillés sur la figure 2). Naturellement, le convertisseur 31 doit continuer à recevoir, sur son interface série, les signaux transitant sur les liens 20 et 21 et les convertir en mots binaires transmis au décodeur des circuits logiques 34 par le bus $B_d$, pour que celui-ci puisse détecter un ordre de changement de mode et recommuter la carte TCD en mode actif sur réception d'un des codes décrits ci-dessus (par exemple les codes 0F ou AA dans l'exemple illustré).

On peut réaliser les circuits 35 et 34 en faisant appel à toutes techniques appropriées. Cet aspect relève d'un simple choix technologique à la portée de l'homme de métier. Dans un exemple de réalisation particulier, il a été fait appel à un circuit intégré disponible dans le commerce du type connu sous l'appellation PLA ("Programmable Array Logic"), c'est à dire un circuit comprenant des portes logiques "ET" et "OU" configurées en réseau, avec ou sans rebouclage en sortie. Ces circuits peuvent également comprendre des bascules. Généralement la configuration du réseau des portes "ET" peut être modifiée, c'est-à-dire programmée, par l'utilisateur par divers procédés selon la technologie utilisée. Il en est de même des réseaux de bascules. De façon plus précise, on peut choisir dans le cadre de l'invention un circuit intégré du modèle PALCE26V12 distribué par la société ADVANCED MICRO DEVICES.

On va maintenant décrire de façon plus précise les modes de fonctionnement "actifs" de la carte TCD 3, c'est-à-dire les modes dans lesquels elle effectue des calculs et transforme les données qui transitent par elle.

Le processeur 32 fonctionne en réalité en mode "pipe-line". En effet, le processeur 32 manipule trois blocs à la fois.

Si on considère le mode TCD directe, le premier bloc est présenté en sortie sous forme de coefficients de Transformée et enregistrés temporairement dans la mémoire 33, le second est en phase de traitement et le dernier est récupéré en entrée sous forme de bits représentant des pixels. Ces trois opérations sont exécutées en même temps. Le mode TCD inverse présente des caractéristiques analogues.

Le convertisseur 31 délivre un signal d'acquit $S_{IACK}$ sur une sortie. Ce signal $S_{IACK}$ indique aux circuits 30 et 33 que les données ont été bien lues dans le convertisseur 31. S'il s'agit du circuit convertisseur du modèle C011 précité, ce signal est généré en standard. Dans le cas contraire, un circuit logique approprié remplira cette fonction.

Le processus de calcul de TCD inverse se déroule de façon analogue à ce qui vient d'être rappelé, il est donc inutile de le décrire plus avant.

La commutation entre les deux modes s'effectue sous la commande du signal $S_{TCD}$. Il suffit de générer un signal à deux états binaires pour sélectionner l'un ou l'autre des modes TCD directe ou TCD inverse. Dans l'exemple décrit, c'est le TRANSPUTER 2 qui est maître et détermine les modes de fonctionnement en émettant les codes appropriés.

Jusqu'à présent, on a considéré implicitement que le système selon l'invention n'était doté que d'une seule carte TCD 3. Dans une variante de réalisation (non représentée), on peut encore améliorer le parallélisme de fonctionnement du système, et par là augmenter la vitesse de traitement, en prévoyant plusieurs cartes TCD 3. Chacune de ces cartes TCD 3 opère sur un bloc $B_{xy}$ (figure 1) distinct de l'image $I_S$ (figure 1). La caractéristique principale de l'invention, à savoir la disposition de ces cartes TCD 3 entre deux TRANSPUTER 1 et 2, est naturellement conservée. Les TRANSPUTERS 1 d'émission peuvent en outre être reliés entre eux par des liens de communication autre que le lien connecté à la carte TCD 3. Il en est de même pour les TRANSPUTERS 2 de réception.

D'un point de vue pratique, la carte (ou les cartes) TCD 3, ainsi que les TRANSPUTERS 1 ou 2, qui sont avantageusement implémentés eux aussi sur des cartes de circuit imprimé, peuvent être enfichés dans des emplacements ("slots") libres de la carte mère d'un micro-ordinateur. Les liaisons entre cartes peuvent être effectuées soit par ladite carte mère si elle est d'un type spécifique, soit par des câbles plats, liaisons coaxiales ou par tout autre moyen approprié. L'alimentation et certains signaux usuels (horloge, etc. ) peuvent avantageusement être fournis par des moyens propres au micro-ordinateur hôte. Naturellement, le terme micro-ordinateur doit être entendu dans le cadre de l'invention dans son acceptation la plus large : micro-ordinateur proprement dit, station de travail, etc. .

Pour fixer les idées, et sans que cela soit limitatif en quoique ce soit de la portée de l'invention, on va maintenant décrire un exemple de TRANSPUTER qui peut être mis en oeuvre dans le cadre de celle-ci par référence à la figure 4. Le modèle de TRANSPUTER choisi pour un système expérimental réalisé par la Demanderesse était un modèle T800. C'est un processeur 1 constitué d'un circuit intégré monoboitier en technologie CMOS à haute intégration ("VLSI") comprenant une unité centrale 16, une unité centrale à virgule flottante 15, une mémoire interne 12, une interface pour des mémoires externes 13, un dispositif 14 pour gérer les interruptions et des interfaces 170 à 173 pour les liens de communication 100 à 113. Le modèle décrit dispose de quatre interfaces, chaque interface étant reliée à un lien entrant (par exemple le lien 110) et un lien sortant (par exemple le lien 100). Les liens 10 et 11 (ou 20 et 21) des figures 2 et 3 peuvent être constitués par n'importe laquelle de ces paires de liens entrants et sortants.

Les principales caractéristiques du TRANSPUTER T800 sont les suivantes:
- unité centrale 32 bits d'une puissance de 10 Mips avec un temps de cycle de 50 ns
- mémoire interne rapide : RAM statique avec un débit de 80 MO/sec. et un temps d'accès de 50 ns
- interface pour mémoire externe rapide permettant d'adresser 4 GO avec un débit de 26,6 MO/sec.
- unité de calcul à virgule flottante de puissance 4,3 Mflops et compatible avec la norme IEEE 754
- quatre liens indépendants de communication bidirectionnelle, permettant un débit maximum de 20 Mbits/sec.

On va maintenant décrire deux exemples d'applications par référence à la figure 5. Cette figure 5 illustre schématiquement sous forme de bloc-diagramme une chaîne complète de traitement d'images numérisées mettant en oeuvre le système selon l'invention.

On retrouve sur la figure 5 les éléments essentiels du système selon l'invention : le TRANSPUTER d'émission non explicitement représenté sur cette figure mais inclue dans un dispositif d'acquisition vidéo référencée 1', la carte TCD 3 et le (ou les ) TRANSPUTER(S) 2 formant le module de traitement. Le dispositif d'acquisition vidéo 1' reçoit les signaux $S_i$ représentatif d'une scène 8 filmée par une caméra 7. On peut, de façon optionnelle adjoindre à cette caméra 7 un moniteur de contrôle (non figuré). La partie vidéo du dispositif d'acquisition 1' peut être constitué, par exemple, par une carte vidéo TFG distribuée par la société PARSYTEC ou une carte INMOS D429. Sa fonction est de réaliser l'acquisition de l'image, de la numériser et de la transmettre au TRANSPUTER inclue dans le module vidéo 1'. Cette image peut également être affichée sur un moniteur 6 ou tout autre organe de visualisation. Pour ce faire, le module d'acquisition vidéo 1' est connecté à une carte d'affichage graphique 4 et communique avec cette carte 4 par l'intermédiaire de signaux d'entrée/sortie $S_{ES}$ sur un des liens du TRANSPUTER 1. La carte d'affichage graphique 4 pilote le moniteur 6 ou l'organe de visualisation par l'intermédiaire de signaux RVB dans l'exemple illustré. Naturellement, tout autre mode de communication peut être mis en oeuvre. Les images affichées peuvent être issues, soit directement de la prise de vue effectuée par la caméra 7, soit être issues de la conversion TCD inverse via la carte TCD 3 et le module de traitement 2.

Selon la caractéristique principale de l'invention, la carte TCD 3 est placée entre deux TRANSPUTERS, inclus dans les modules 1' et 2, et intercalée sur un lien de communication bidirectionnelle: liaisons 10, 11, 20 et 21.

La carte graphique 4 peut en outre être pilotée par un micro-ordinateur 5, communiquant avec elle par un bus ou des liaisons de commande $S_{PC}$. Ce micro-ordinateur 5 joue le rôle, dans l'exemple illustré, de serveur de fichier.

Enfin le module de traitement 2 peut transmettre un signal $S_{OK}$ au module d'acquisition l'indiquant que l'acquisition est correcte. Cette transmission peut être réalisée de TRANSPUTER à TRANSPUTER, via un des liens de communication bidirectionnelle, ou par tout autre moyen.

Les images transmises après transformation TCD dans la carte TCD 3 au module de traitement 2 peuvent subir un traitement ultérieur en vue d'une transmission bas débit dans un premier exemple d'application du système selon l'invention.

Des algorithmes de codage permettant d'obtenir une transmission à bas débit sont connus. Outre les étapes de découpage en blocs $B_{xy}$ (figure 1) de l'image initiale $I_S$ (figure 1) prise par la caméra 7 et la transformation TCD directe, effectuée par la carte 3 dans le cadre de l'invention, ces algorithmes comprennent une vectorisation de chaque bloc de coefficients TCD et une quantification vectorielle des vecteurs issus du bloc TCD. A l'issu de ce traitement, effectué en parallèle dans le cadre de l'invention par le ou les TRANSPUTER(S) du module de traitement 2, les images codées peuvent être transmises sur un réseau de transmission (non figuré, par exemple du type RNIS) via un modem adapté et nécessitent un débit de transmission très inférieur à celui que nécessiteraient des images non codées par cet algorithme, c'est-à-dire non compressées.

Le décodage d'une image, c'est-à-dire la décompression, par exemple après transmission et réception des éléments constitutifs de celle-ci, peut s'effectuer de façon symétrique.

Sur la figure 5, on a figuré une autre application possible du système selon l'invention : la commande d'un dispositif d'autofocalisation d'une caméra vidéo ou équivalent. Sur la figure 5 la partie des circuits spécifiques à cette application est représentée en traits pointillés. Il s'agit essentiellement du module 9 de commande de la caméra 7. Outre ce dispositif spécifique, on utilise sans modifications matérielles notables les éléments de la chaîne de traitement d'images numérisées qui viennent d'être rappelés et qu'il est inutile de redécrire entièrement. Pour commander la caméra 7 via le module de commande 9, on utilise notamment le (ou l'un des) TRANSPUTER(S) du module de traitement 2. Celui-ci exécute des calculs sur les coefficients de TCD élaborés par la carte TCD 3 sur les images prises par la caméra 7, numérisées par le module 1' et prétraitées par le TRANSPUTER compris dans ce module. Le résultat des calculs permet de savoir si la mise au point de la caméra 7 est correcte. Pour ce faire, on peut faire appel, sans que cela soit limitatif de la portée de l'invention, à un algorithme objet de la demande de brevet français N° 91 04420, déposée le 11 avril 1991.

Si l'acquisition est correcte, le module transmet un signal d'acquisition correcte $S_{OK}$ à la carte d'affichage graphique 4, directement ou comme illustré sur la figure 5 via le TRANSPUTER compris dans le module d'acquisition 1', pour affichage de l'image sur le moniteur 6. Dans le cas contraire, un ordre $S_{NMP}$ est transmis au module 9 de commande de la caméra 7 de manière à réaliser une nouvelle mise au point avant d'effectuer une nouvelle acquisition. Le module de commande 7 agit sur des moyens classiques de mise au point (non figurés) de la caméra 7 par l'intermédiaire d'un signal de commande de caméra $S_{CC}$. Le processus se répète jusqu'à ce que l'on obtienne une focalisation correcte.

Comme il a été indiqué, l'architecture notamment du module de traitement 2 est susceptible de nombreuses variantes allant du TRANSPUTER simple à un réseau complet de TRANSPUTERS communiquant entre eux. Dans ce dernier cas la configuration du réseau peut être fixe ou variable. Cette configuration peut être commandée par les moyens de configurations représentés sous la référence 4 (figure 2). Dans tous les cas elle est avantageusement optimisée pour s'adapter à l'application spécifique envisagée. Les processeurs composant le réseau précité peuvent être tous des TRANSPUTERS ou il peut s'agir d'un réseau non-homogène comprenant un ou plusieurs TRANSPUTER(S) connecté(s) à d'autres type de processeurs.

Les figures 6a à 6f illustrent quelques topologies de configurations possibles du module de traitement 2 : en anneau (figure 6a), de type dit "Illiac" (figure 6b), en arbre (figure 6c), à connexions complètes (figure 6d), en "Kcube" (figure 6e) ou du type en réseau à échanges et permutations (figure 6f). Sur chaque figure, seuls deux processeurs ont été référencés: les processeurs $T_1$ à $T_n$, ce de façon arbitraire pour fixer les idées, cette numérotation n'impliquant aucune hiérarchie réelle.

Naturellement, l'invention n'est pas limitée aux seuls exemples de réalisation précisément décrits en relation avec les figures 1 à 6. En particulier, elle ne saurait se limiter aux deux seules applications illustrées par la figure 5. Elle s'applique plus généralement, comme il a été indiqué à toutes les applications concernant le traitement d'images numérisées faisant appel transformations TCD directe et inverse.

Le système selon l'invention présente les nombreux avantages qui ont été rappelés et que l'on peut résumer comme suit : souplesse, bon rapport coût/performances, vitesse de traitement élevée, puissance de calcul, calculs en temps réel, modularité et adaptabilité, notamment dues à la configuration modifiable et optimisée du module de traitement.

## Revendications

1. Système constituant au moins une chaîne de traitement d'images numérisées ($I_S$) comprenant des moyens (7, 1, 1') pour l'acquisition de caractéristiques physiques prédéterminées de ces images et pour leur conversion en signaux électriques numériques représentatifs de ces images ($I_S$), des premiers moyens de traitement (1, 1') permettant au moins la décomposition desdites images en blocs d'éléments binaires ($B_{xy}$) de taille déterminée, des moyens pour calculer au moins la Transformée en Cosinus Discrète directe de ces blocs ($B_{xy}$) et fournir des blocs de coefficients ($CO_{xy}$) correspondants et des seconds moyens de traitement (2) opérant sur ces blocs de coefficients ($CO_{xy}$), les premiers (1, 1') et seconds (2) moyens de traitement comprenant chacun au moins un processeur d'un type susceptible de fonctionner en parallèle et comportant au moins un lien de communication bidirectionnelle (10, 11), ces premiers (1, 1') et seconds (2) moyens de traitement étant connectés par au moins un lien de communication bidirectionnelle commun (10, 11, 20, 21), caractérisé en ce que les moyens (3) de calcul de la Transformée en Cosinus Discrète sont intercalés sur ce lien commun.

2. Système selon la revendication 1, caractérisé en ce que lesdits processeurs des premiers et seconds moyens de traitement sont des TRANSPUTERS (1, 2).

3. Système selon l'une quelconque des revendications 1 à 2, caractérisé en ce que lesdits seconds moyens de traitement (2) comprennent plusieurs processeurs ($T_1$ à $T_n$) fonctionnant en parallèle et en ce qu'un de ces processeurs est relié par un lien de communication bidirectionnelle (20, 21) à un processeur des premiers moyens de traitement via les moyens (3) de calcul de Transformée en Cosinus Discrète.

4. Système selon l'une quelconque des revendications 1 à 3, caractérisé en ce que les dits liens de communication bidirectionnelle comprennent chacun deux liaisons (10-11, 20-21) véhiculant des signaux binaires séries.

5. Système selon la revendication 4, caractérisé en ce que lesdits moyens de calcul de Transformée en Cosinus Discrète (3) comprennent au moins, disposés en cascade, un premier convertisseur série/parallèle (30) connecté par un port série à un processeur des premiers moyens de traitement (1, 1') par un de ses liens de communication bidirectionnelle (10, 11), un circuit intégré (32) spécialisé pour le calcul de la Transformé Cosinus Discrète, une mémoire vive (33) et un second convertisseur série/parallèle (31) connecté par un port série à un processeur des seconds moyens de traitement (2) par un de ses liens de communication bidirectionnelle (20, 21).

6. Système selon la revendication 5, caractérisé en ce que ledit circuit intégré spécialisé (32) effectue les calculs de Transformée en Cosinus Discrète directe sur les blocs d'éléments binaires ($B_{xy}$) pour les transformer en blocs de coefficients ($CO_{xy}$) et de Transformée en Cosinus Discrète inverse sur des blocs de coefficients ($CO_{xy}$) pour les transformer en blocs d'éléments binaires (Bxy) transmis aux premiers moyens de traitement (1, 1').

7. Système selon la revendication 6, caractérisé en ce que lesdits moyens de calcul (3) de Transformée en Cosinus Discrète comprennent en outre des circuits logiques de commande comportant au moins un compteur de cycles d'horloge (35) comptant les éléments binaires compris dans chacun des blocs ($B_{xy}$) et des moyens de décodage (34) agencés pour recevoir et reconnaître des mots de commande reçus des seconds moyens de traitement (2), via le second convertisseur série/parallèle (31), de manière à commuter les moyens de calculs (3) dans au moins deux états distincts : un premier état, dit transparent, dans lequel les données véhiculées par les liens de communication bidirectionnelle (10-11, 20-21), ne sont pas interceptées et transformées, et un second état, dit actif, dans lequel ces données sont transformées.

8. Système selon la revendication 7, caractérisé en ce que le second état comprend deux sous-états : un premier état actif pour lequel la Transformée en Cosinus Discrète directe est réalisée et un second état actif pour lequel la Transformée en Cosinus Discrète inverse est réalisée.

9. Système selon l'une quelconque des revendications 1 à 8, caractérisé en ce que lesdits blocs d'éléments binaires ($B_{xy}$) représentent des fractions d'images numérisées ($I_S$) de 8x8 pixels.

10. Système selon l'une quelconque des revendications 1 à 9, caractérisé en ce qu'il comprend en outre des moyens (4) pour configurer la topologie des premiers (1, 1') et seconds (2) moyens de traitement.

11. Système selon l'une quelconque des revendications 1 à 10, caractérisé en ce qu'il comprend plusieurs chaînes de traitement d'images numérisées ($I_S$), en ce que chacune des chaînes comprend au moins des premiers (1, 1') et seconds (2) moyens de traitement et des moyens de calcul (3) de Transformée en Cosinus Discrète disposés sur un lien de communication bidirectionnelle (10-11, 20-21) commun, et en ce que chaque chaîne de traitement d'images numérisées opère en parallèle sur un bloc distinct d'éléments binaires ($B_{xy}$) ou de coefficients de transformée ($CO_{xy}$).

12. Dispositif de codage d'images numérisées, destiné à une transmission à bas débit, caractérisé en ce qu'il comprend des moyens de prise de vue (7), des moyens (1') d'acquisition et de numérisation des images issues de ladite prise de vue et des moyens de visualisation (4, 6), en ce qu'il comprend un système constituant au moins une chaîne de traitement d'images numérisées selon l'une quelconque des revendications 1 à 11 opérant sur les images numérisées ($I_S$) et en ce que les seconds moyens de traitement (2) effectuent des opérations réversibles de vectorisation des blocs de coefficients de transformée ($CO_{xy}$) et de quantification vectorielle des vecteurs issus de ces blocs ($CO_{xy}$).

13. Dispositif de commande d'auto-focalisation pour la mise au point d'une caméra vidéo (7), caractérisé en ce qu'il comprend des moyens de prise de vue constitués par ladite caméra (7), des moyens (1') d'acquisition et de numérisation des images issues de la prise de vue et des moyens de visualisation d'images (4, 6), en ce qu'il comprend un système constituant au moins une chaîne de traitement d'images numérisées selon l'une quelconque des revendications 1 à 11, et en ce que les seconds moyens de traitement (2) sont agencés pour transmettre des signaux de commandes itératifs ($S_{NMP}$) à des circuits de commande (9) de la mise au point de ladite caméra (7) tant que celle-ci est incorrecte et pour transmettre un signal d'acquisition correcte ($S_{OK}$) aux moyens d'acquisition, de numérisation et de visualisation (1', 4, 6) d'images lorsque la mise au point est correcte.

# FIG_1

IMAGE SOURCE

$B_{xy}$

$TCD_D$

COEFFICIENT TCD

| 60 60 60... | |
| 60 60 ..... | |

→ TCD DIRECT →

$B_{xy}$  $I_S$

TCD INVERSE ←

| 60 0 0_ | |
| 0 0 _ | |

$Co_{xy}$

$Co$

$TCD_I$

# FIG_2

TRANSPUTER ⟶ 10 ⟶ TCD ⟶ 21 ⟶ TRANSPUTER

11          3          20

1

$l_2$

COMMANDE DE CONFIGURATION — 4

2

# FIG_3

36

$S_{iACK}$

21

10  30  32  33  31

Transputer d'émission — Convertisseur série/parallèle — [32] — Mémoire — Convertisseur parallèle/série — Transputer de réception

11  $S_{qvalid}$  $S_{go}$  $S_{TCD}$  $S_{TR}$  Processeur de TCD  $Bd$  20

1

Compteur de cycles d'horloge — 35

Décodeur — 34

3

2

## FIG_4

## FIG_5

# FIG_6a

$T_1$

$T_n$

Anneau

# FIG_6b

$T_1$

Illiac

# FIG_6c

$T_1$

$T_n$

Arbre

# FIG_6d

$T_1$

$T_n$

Complètement
connecté

# FIG_6e

$T_1$

$T_n$

KCube

# FIG_6f

$T_1$

$T_n$

Réseau à échanges
et permutation

**Office européen des brevets**

# RAPPORT DE RECHERCHE EUROPEENNE

Numero de la demande

EP 94 40 2213

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE-A-41 32 600 (PHILIPS PATENTVERWALTUNG GMBH) | 1-4 | H04N7/26 |
| A | * le document en entier * | 5-13 | |
| | --- | | |
| A | EUROPEAN TRANSACTIONS ON TELECOMMUNICATIONS AND RELATED TECHNOLOGIES, vol.2, no.3, 1 Mai 1991, MILANO, IT pages 293 - 298, XP236961 BROFFERIO ET AL. 'Transputer Based Videocoders: Requirements and Architectures' * alinéa 3; figure 1 * | 1-13 | |
| | --- | | |
| A | APPLICATIONS OF TRANSPUTERS 3, 28 Août 1991, IOS PRESS, AMSTERDAM, NL pages 542 - 547 M.N. CHONG ET AL. 'Transputer Based Image Codec for Local Area Network' * alinéa 3 -alinéa 4; figure 3 * | 1-13 | |
| | --- | | DOMAINES TECHNIQUES RECHERCHES (Int.Cl.6) |
| A | SPIE PROCEEDINGS. IMAGE PROCESSING AND INTERCHANGE: IMPLEMENTATION AND SYSTEMS, vol.1659, 12 Février 1992, SAN JOSE, CA, USA pages 24 - 29 S.C. PURCELL ET AL. 'C-Cube MPEG Video Processor' * alinéa 4 * | 1-13 | H04N |
| | --- | | |
| A | WO-A-93 12609 (AVID TECHNOLOGY, INC.) | | |
| | --- | | |
| | -/-- | | |

Le présent rapport a été établi pour toutes les revendications

| Lieu de la recherche | Date d'achèvement de la recherche | Examinateur |
|---|---|---|
| LA HAYE | 9 Décembre 1994 | Foglia, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

EP 0 648 058 A1

Office européen
des brevets

**RAPPORT DE RECHERCHE EUROPEENNE**

Numero de la demande
EP 94 40 2213

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GLOBECOM '89. PROCEEDINGS OF THE IEEE GLOBAL TELECOMMUNICATIONS CONFERENCE, vol.2, 27 Novembre 1989, DALLAS, TEXAS, USA pages 908 - 912 M. NOMURA ET AL. 'Implementation of Video CODEC with Programmable Parallel DSP' * alinéa 2 -alinéa 4 * | 1-13 | |
| A | EP-A-0 508 897 (TELEDIFFUSION DE FRANCE) * le document en entier * | 1-13 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 9 Décembre 1994 | Foglia, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant